# EUROPEAN PATENT APPLICATION

(11) **EP 2 152 021 A1**
(43) Date of publication of application: **10.02.2010**
(21) Application number: 08776924.6
(22) Date of filing: 28.05.2008
(51) Int. Cl.: H04Q 7/38, G06K 17/00, H04M 1/675, H04M 11/00, H04Q 7/32

(54) **MOBILE TERMINAL, MOBILE TERMINAL MANAGEMENT SYSTEM, AND DATA STORAGE METHOD**

(30) Priority: 28.05.2007 JP 2007140883
(71) Applicant: Nec Corporation, Tokyo 108-8001 (JP)
(72) Inventor: TAKAGI, Takahiro, Tokyo 108-8001 (JP)
(74) Representative: Glawe, Delfs, Moll
(86) International application number: PCT/JP2008/059809
(87) International publication number: WO 2008/146840

(57) **Abstract**

A portable terminal of the present invention includes non-contact IC chip 12, removable memory card 11, application storing means for storing application software downloaded, and data writing means for storing data for use by application software which utilizes the non-contact IC chip in memory card 11, wherein the data writing means stores identification information of new application software in memory card 11 when the application software is downloaded.

## Description

### Technical Field

The present invention relates to a portable terminal, a portable terminal management system, a data saving method, a portable terminal management method, and portable terminal management program.

### Background Art

A portable terminal such as a portable telephone may comprise a non-contact IC chip, and transmit/receive data to/from external devices through the non-contact IC chip, thereby allowing the user of the portable terminal to enjoy services. For example, there is a portable telephone which allows for shopping by updating the remaining amount of electronic money stored in the portable telephone through a non-contact IC chip. In another implementation for utilizing a portable telephone, the portable telephone receives passenger ticket data through a non-contact IC chip, such that it can be used as a passenger ticket. NFC (Near Field Communication) is an example of a short-range radio communication standard using a non-contact IC chip. An NFC chip refers to a non-contact IC chip which performs NFC-based radio communications. In Europe and America, non-contact IC service trials have been attempted for portable telephones which are equipped with NFC chips.

Also, International Publication WO2002/061572 describes that upon exchange of a mobile terminal, a UIM (User Identity Module) which stores subscriber information is mounted or built in a new mobile terminal such that the new mobile terminal can be brought into utilization. In addition, the publication describes a system for delivering a program to the UIM.

JP-2004-94539A describes in paragraphs 0015 and 0016, a portable terminal which stores a secret key of a user and an encryption program in a UIM to improve the security of an electronic value.

JP-2004-153461A describes in paragraphs 0040 to 0048 a system for automatically downloading contents not stored in a different portable telephone, from among those contents for which a user of a UIM has the right to use, when the UIM is mounted in the portable telephone.

### Disclosure of Invention

An NFC chip comprises a function as an RF (Radio Frequency) section, i.e., a non-contact communication section. However, the NFC chip does not include an application area which is an area for storing application software downloaded by a portable terminal, or a data storage area for storing data (for example, electronic money data) for use by the portable terminal which operates in accordance with the application software.

In many cases, data used by a user of a portable terminal, when the user is going to receive a service using a non-contact IC chip such as NFC, is data which is the user's property, such as electronic money, electronic passenger tickets and the like. Accordingly, the importance of data used for receiving a service using a non-contact IC chip, is significantly larger as compared with data which is used by a portable terminal to execute processing without using a non-contact IC chip. When such data is stored in a storage device contained in a portable terminal itself, it is difficult to transport the data into a new portable terminal when it is substituted for the portable terminal. Thus, it is preferable that a portable terminal can appropriately save data which is used when a service is received using a non-contact IC chip.

Also, types of services which utilize a non-contact IC chip such as NFC cannot be added or deleted through communication which utilizes a radio communication function (communication function through a radio base station and a communication network) of a portable device.

Accordingly, the present invention is characterized by the ability to appropriately save data for use in receiving a service using a non-contact IC chip.

A portable terminal of the present invention comprises a non-contact IC chip, a removable memory card, application storing means for storing application software downloaded, and data writing means for storing data for use by application software which utilizes the non-contact IC chip in the memory card, wherein the data writing means stores identification information of new application software in the memory card when the application software is downloaded.

Also, a portable terminal management system of the present invention, for managing a memory card mounted in a portable terminal which comprises a non-contact IC chip, the memory card including a storage area reserved for storing data for use by application software which utilizes the non-contact IC chip, the portable terminal management system comprises: user management database storing means for storing a user management database which is a database that relates an ID defined for the memory card to identification information of application software for which a storage area has been reserved in the memory card; user management database managing means, responsive to reception of the ID defined for the memory card and service utilization request information which is information indicative of a request for utilization of new application software from the portable terminal, for registering the ID defined for the memory card and the identification information of the application software in the user management database in relationship to each other; and reserve instruction transmitting means for transmitting an instruction to the portable terminal to reserve a storage area dedicated to the application software in the memory card.

Also, a data saving method of the present invention, applied to a portable terminal which comprises a non-contact IC chip, a removable memory card, and application storing means for storing application software downloaded, the data saving method comprises: storing data for use by application software which utilizes the non-contact IC chip in the memory card; and storing identification information of new application software in the memory card when the application software is downloaded.

Also, a portable terminal management method of the present invention ,applied to a portable terminal management system for managing a memory card mounted in a portable terminal which comprises a non-contact IC chip, the memory card including a storage area reserved for storing data for use by application software which utilizes the non-contact IC chip, the portable terminal management system comprising user management database storing means for storing a user management database which is a database that relates an ID defined for the memory card to identification information of application software for which a storage area has been reserved in the memory card, the portal terminal management method comprises: upon receipt of the ID defined for the memory card and service utilization request information which is information indicative of a request for utilization of new application software from the portable terminal, registering the ID defined for the memory card and the identification information of the application software in the user management database in relationship to each other; and transmitting an instruction to the portable terminal to reserve a storage area dedicated to the application software in said memory card.

A portable terminal management program of the present invention, installed in a computer for managing a memory card mounted in a portable terminal comprising a non-contact IC chip, the memory card including a storage area reserved for storing data for use by application software which utilizes the non-contact IC chip, the computer comprising user management database storing means for storing a user management database which is a database that relates an ID defined for the memory card to identification information of application software for which a storage area has been reserved in the memory card, the program causes the computer to execute: user management database management processing, responsive to reception of the ID defined for the memory card and service utilization request information which is information indicative of a request for utilization of new application software from the portable terminal, for registering the ID defined for the memory card and the identification information of the application software in the user management database in relationship to each other; and reserve instruction transmission processing for transmitting an instruction to the portable terminal to reserve a storage area dedicated to the application software in the memory card.

### Brief Description of Drawings

[Fig. 1]

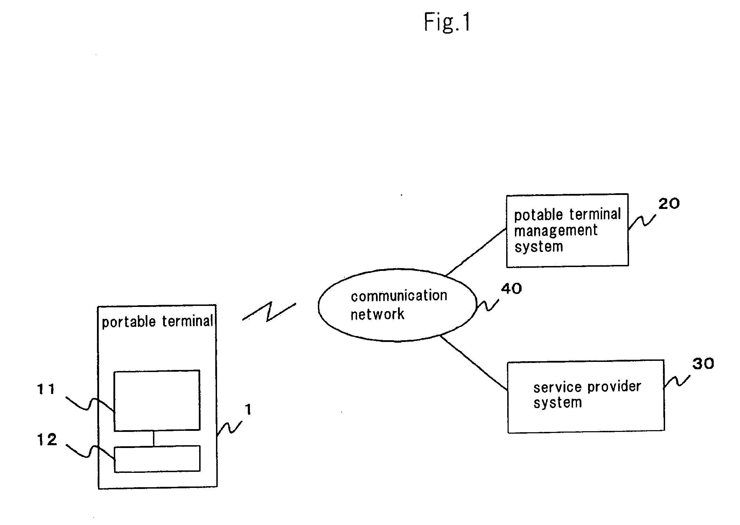

   Fig. 1 is an explanatory diagram showing a state where a portable terminal and a portable terminal management system of an embodiment are connected through a communication network.
[Fig. 2]

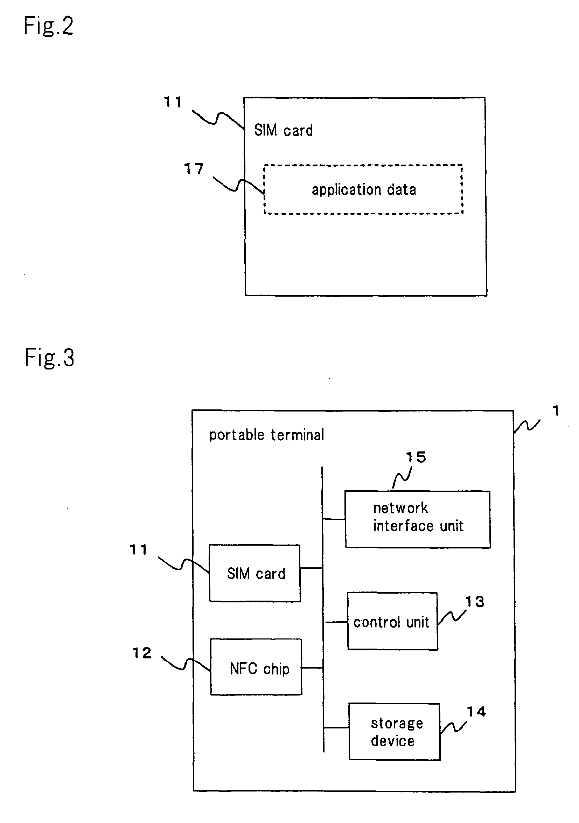

   Fig. 2 is an explanatory diagram showing exemplary data stored by a SIM card.
[Fig. 3]
   Fig. 3 is a block diagram showing an exemplary configuration of a portable terminal of an embodiment.
[Fig. 4]

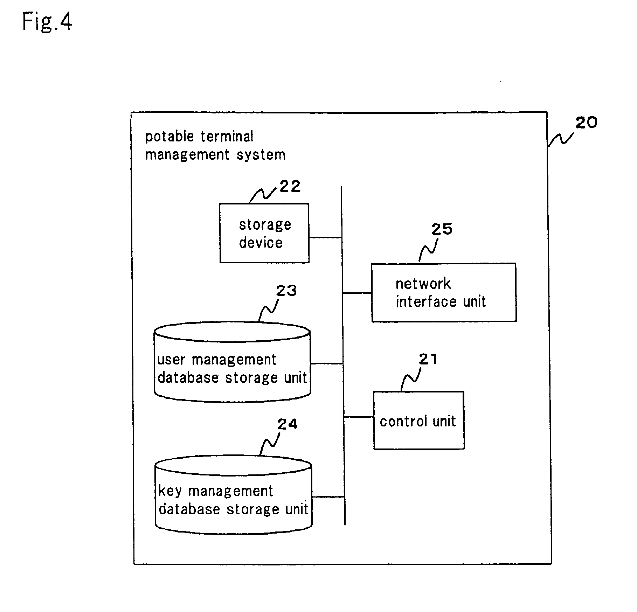

   Fig. 4 is a block diagram showing an exemplary configuration of a portable terminal management system.
[Fig. 5]

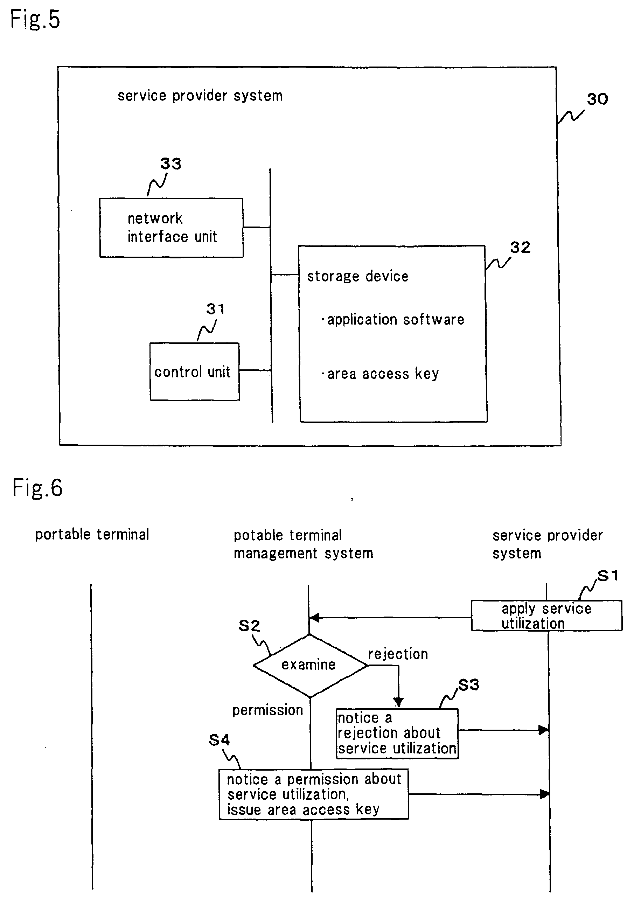

   Fig. 5 is a block diagram showing an exemplary configuration of an SP system (service provider system).
[Fig. 6]
   Fig. 6 is a flow chart showing exemplary operations when the portable terminal management system provides an area access key to the SP system.
[Fig. 7]

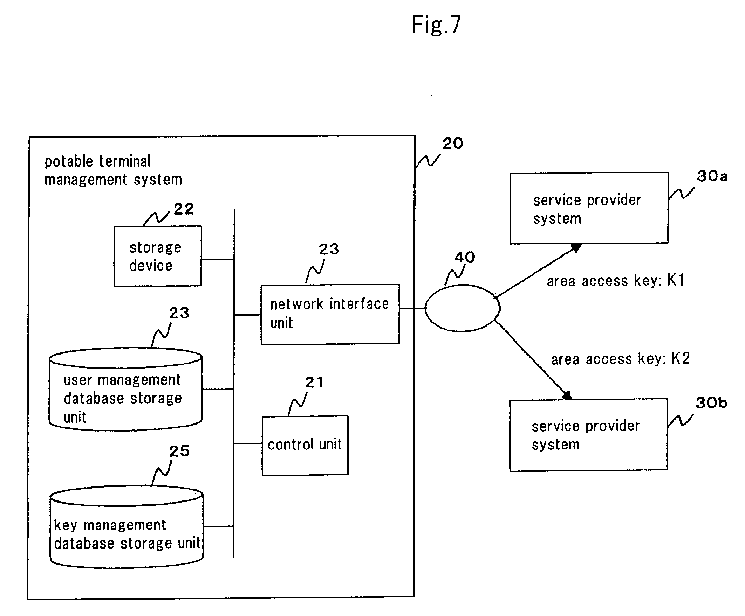

   Fig. 7 is an explanatory diagram showing a situation where an area access key is distributed to a plurality of SP systems.
[Fig. 8]

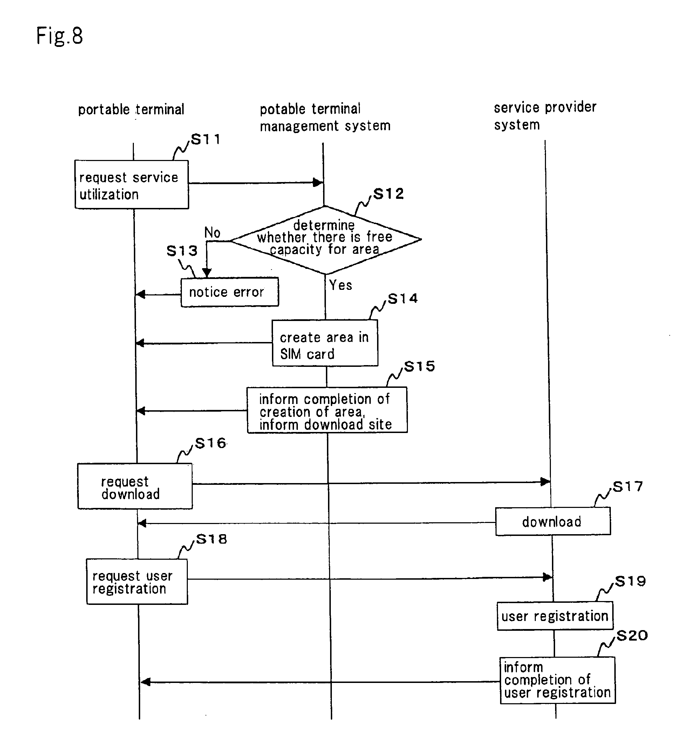

   Fig. 8 is a flow chart showing exemplary operations when a storage area dedicated to applications is reserved in a SIM card to download an application.
[Fig. 9]

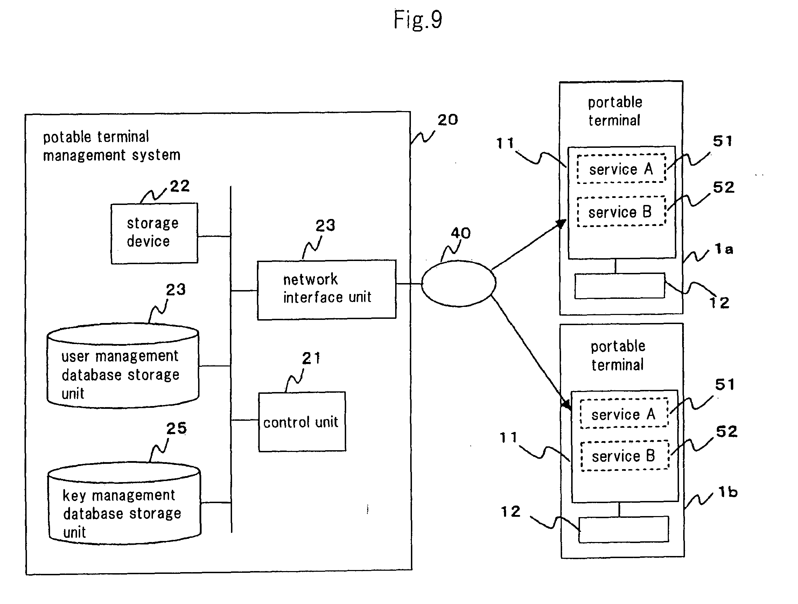

   Fig. 9 is an explanatory diagram showing a situation where storage areas dedicated to applications are reserved in respective SIM cards of a plurality of portable telephones.
[Fig. 10]

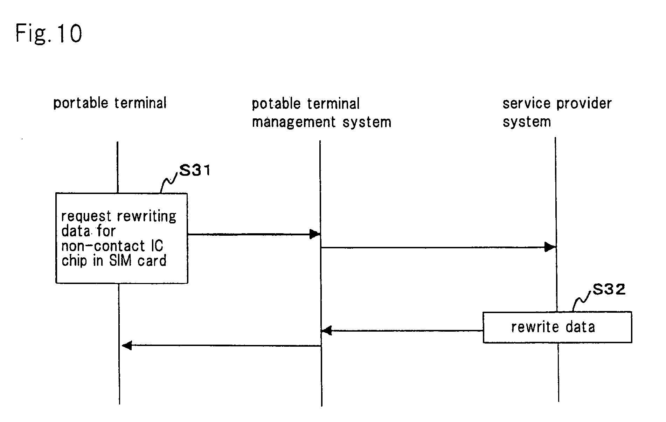

   Fig. 10 is a flow chart showing an exemplary operation for updating application data stored in a SIM card.
[Fig. 11]

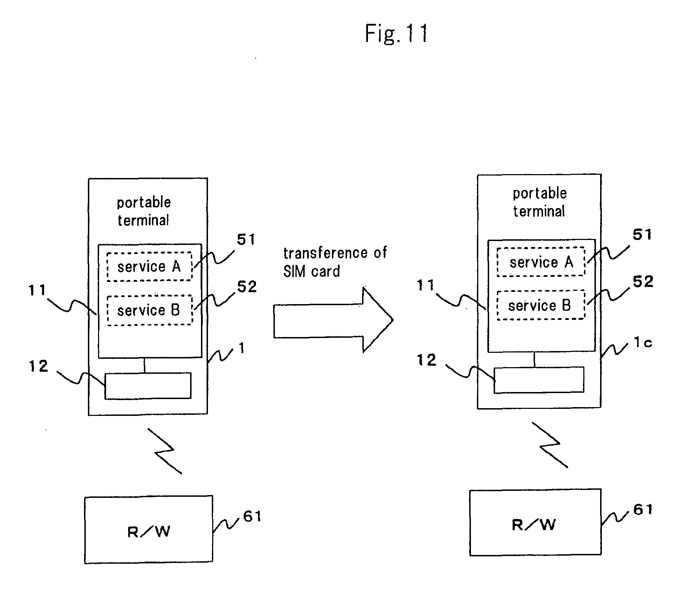

   Fig. 11 is an explanatory diagram showing a situation where a SIM card is transported to a portable telephone which is to be used from then on.

### Description of Reference Numerals

- 1: Portable Telephone (Portable Terminal)
- 11: SIM Card
- 12: NFC Chip (Non-Contact IC Chip)
- 13: Control Unit
- 14: Storage Device
- 15: Network Interface Unit
- 20: Portable Terminal Management System
- 21: Control Unit
- 22: Storage Device
- 23: User Management Database Storage Unit
- 24: Key Management Database Storage Unit
- 25: Network Interface Unit
- 20: Service Provider System

### Best Mode for Carrying Out the Invention

In the following, an embodiment of the present invention will be described with reference to the drawings.

Fig. 1 is an explanatory diagram showing a state where a portable terminal and a portable terminal management system of this embodiment are connected through a communication network. Portable terminal 1 and portable terminal management system 20 of this embodiment are connected through communication network 40, and can transmit/receive information. Service provider system owned by a service provider (hereinafter labeled "SP system") 30 is also connected to communication network 40.

Communication network 40 is provided with a radio base station (not shown) for making radio communications with portable terminal 1. Portable terminal 1 communicates over the air with the radio base station (not shown) provided in communication network 40 to transmit/receive information to/from other devices through communication network 40. This communication function of portable terminal 1 is sometimes referred to as an "air network function."

While the following description will be given in connection with an example where portable terminal 1 is a portable telephone, portable terminal 1 is not limited to a portable telephone, but may be any portable terminal other than a telephone.

SP system 30 is an information processing device which is responsive to a request from portable telephone 1 to download application software (hereinafter simply referred to as the "application") to transmit the application to portable telephone 1. Also, SP system 30 communicates with portable telephone 1, when portable telephone 1 operates in accordance with a downloaded application, to update data within SIM (Subscriber Identity Module) card 11 equipped in portable telephone 1. Specifically, SP system 30 transmits an instruction to portable telephone 1 for rewriting data within SIM card 11.

Portable telephone 1 comprises non-contact IC chip 12 and SIM card 11. Portable telephone 1 downloads an application from SP system 30, and performs processing in accordance with the type of the application in line with the application. For example, portable terminal 1 performs processing for increasing (charging) the amount of electronic money, or processing for using electronic money. Non-contact IC chip 12 is a communication interface with other devices (for example, reader/writer and the like). While the following description will be given in connection with an example where portable telephone 1 comprises an NFC chip as non-contact IC chip 12, the NFC chip is illustrative, and non-contact IC chip 12 is not limited to the NFC chip.

SIM card 11 is an IC card which can be removably mounted to portable telephone (portable terminal) 1 for storing data therein. Portable telephone 1 stores data for use by application software which utilizes NFC chip 12 in SIM card 11. For example, portable telephone 1 stores data received thereby, after its operation performed in accordance with an application, in SIM card 11, and updates data stored in SIM card 11 in accordance with received data.

Giving a more specific example, assuming that portable telephone 1 increases (charges) the amount of electronic money, by way of example, upon receipt of data of electronic money through NFC chip 12, portable telephone 1 stores this data in SIM card 11. In another instance, assuming that a user of portable telephone 1 makes a purchase, upon receipt of a payment request through NFC chip 12, portable telephone 1 subtracts a requested amount for the payment from the balance of electronic money stored in SIM card 11 to update the balance of the electronic money. While the foregoing description has been given in connection with data of electronic money, cited as an example, data stored in SIM card 11 is not limited to data of electronic money.

Also, when portable telephone 1 downloads an application, SIM card 11 stores identification information of this application. As the identification information of an application, for example, the title of the application may be used.

Fig. 2 is an explanatory diagram showing exemplary data stored in SIM card 11. Application data refers to data used by application software which utilizes NFC chip 12, and identification information of an application. As shown in Fig. 2, SIM card 11 stores application data 17. Application data 17 differs depending on the type of a corresponding application. While electronic money data or the like, for example, may be given as an example of application data 17, the application data is not limited to these data.

Additionally, SIM card 11 may store application data for a plurality of types of applications. Also, information stored in SIM card 11 is not limited to the application data. For example, an area access key, later described is stored in SIM card 11 as well. Additionally, SIM card 11 may store, for example, information indicative of a download site of a corresponding application (hereinafter, simply referred to the "application download site") together with application data.

As described below, SIM card 11 has storage areas dedicated to respective applications, reserved exclusively for each application. Application data and an area access key associated with respective applications are stored in storage areas dedicated to these applications.

Portable terminal management system 20 manages the SIM card mounted in portable telephone 1. Specifically, upon receipt of service utilization request information from portable telephone 1 for requesting utilization of new application, portable terminal management system 20 instructs portable telephone 1 to reserve a storage area dedicated to the application in SIM card 11. "Reservation" herein means that a storage area is set for exclusive use by each application.

Portable terminal management system 20 has also created authentication data on a per-application basis, for use when data is stored in a storage area dedicated to a certain application, or when data is updated in the storage area. In the following, this authentication data is labeled the "area access key." After portable terminal management system 20 has instructed portable telephone 1 to reserve a storage area dedicated to an application in response to service utilization request information, portable terminal management system 20 transmits an area access key for that application to portable telephone 1, and instructs portable telephone 1 to store the area access key in the storage area dedicated to the application.

SP system 30 which provides applications also receives an area access key for each application from portable terminal management system 20, and holds it therein. Then, SP system 30 which holds the area access key can access the storage area reserved in SIM card 11. However, since portable terminal management system 20 creates an area access key on a per-application basis, SP system 30 cannot access storage areas for applications other than applications provided thereby. For example, SP system 30 cannot access storage areas for applications provided by an SP system of another company (another service provider).

The area access key comprises, for example, a character string uniquely defined on a per-application basis, but may comprise data other than a character string.

Portable terminal management system 20 also functions as a gate way between portable telephone 1 and SP system 30 when portable telephone 1 updates application data within SIM card 11 in accordance with an application. As such, portable terminal management system 20 relays data between portable telephone 1 and SP system 30 when portable telephone 1 updates application data within SIM card 11 in accordance with an application.

Portable telephone 1 stores application data 17 (see Fig. 2) of respective applications in storage areas corresponding to the applications in the SIM card.

Fig. 3 is a block diagram showing an exemplary configuration of a portable terminal (portable telephone, by way of example) of this embodiment. Portable telephone 1 further comprises control unit 13, storage device 14, and network interface unit 15 in addition to SIM card 11 and non-contact IC chip (NFC chip in this embodiment) 12 shown in Fig. 1.

Control unit 13 operates in accordance with a program for the portable terminal stored in storage device 14, and with a downloaded application. Control unit 13 is implemented, for example, by a CPU (Central Processing Unit). Control unit 13 downloads an application, and stores the application in storage device 14. Control unit 13 also transmits/receives data to/from SP system 30 through NFC chip 12 or network interface unit 15 in accordance with the downloaded application, and updates application data in a storage area dedicated to the application in accordance with the received data. In this event, control unit 13 updates the application data in accordance with received data when portable telephone 1 receives the data together with an area access key which matches an area access key stored in a storage area of SIM card 11. However, control unit 13 does not update the application data if the area access key is not received.

Storage device 14 is a storage device for storing a portable terminal program for controlling portable telephone 1 and downloaded applications.

Network interface unit 15 is a communication interface with communication network 40 (see Fig. 1). Network interface unit 15 communicates over the air with a radio base station (not shown) installed in communication network 40. Data transmitted by portable telephone 1 is received by the radio base station, and transmitted to a destination device through communication network 40. On the other hand, data transmitted from another device to portable telephone 1 is sent to the radio base station through communication network 40, and transmitted from the radio base station to portable telephone 1.

When control unit 13 communicates with SP system 30 in accordance with a downloaded application, the communication may be made through NFC chip 12 or through network interface unit 15 and communication network 40.

Fig. 4 is a block diagram showing an exemplary configuration of portable terminal management system 20. Portable terminal management system 20 comprises control unit 21, storage device 22, user management database storage unit 23, key management database storage unit 24, and network interface unit 25.

Control unit 21 of portable terminal management system 20 creates an area access key unique to an application in accordance with a portable terminal management program provided in storage device 22, and transmits the area access key to SP system 30. Control unit 21 also responds to a request from portable telephone 1 to instruct portable telephone 1 to reserve a storage area dedicated to the application in SIM card 11, and to store the area access key in the storage area. Control unit 21 is implemented, for example, by a CPU.

Storage device 22 is a storage device for storing the portable terminal management program for controlling portable terminal management system 20.

User management database storage device 23 is a storage device for storing a user management database. The user management database is a database for listing, on a per-SIM card basis, applications for which storage areas have been reserved in the SIM cards. For example, this database maps an ID (identification) previously assigned to a SIM card to identification information of an application for which a storage area has been reserved in that SIM card. The following description will be given in connection with an example where a user ID previously written in a SIM card is used as the ID previously defined for the SIM card.

Key management database storage unit 24 is a storage device for storing a key management database. The key management database is a database which maps identification information of applications, area access keys for the applications, download sites of the applications, and storage capacities which should be reserved in SIM cards as storage areas dedicated to the applications to one another.

Network interface unit 25 of portable terminal management system 20 is an interface with communication network 40 (see Fig. 1).

Fig. 5 is a block diagram showing an exemplary configuration of SP system 30. SP system 30 comprises control unit 31, storage device 32, and network interface unit 33.

Control unit 31 of SP system 30 operates in accordance with an SP system control program stored in storage device 32. For example, control unit 31 transmits an application which is requested for downloading. Also, for example, when SP system 30 receives an area access key corresponding to an application, control unit 31 stores the area access key in storage device 32. Control unit 31 is implemented, for example, by a CPU.

Storage device 32 is a storage device for storing the SP system control program for controlling SP system 30, and applications to be downloaded to portable telephone 1. Storage device 32 also stores an area access key received by SP system 30 from portable terminal management system 20.

Network interface unit 33 of SP system 30 is an interface with communication network 40 (see Fig. 1).

Next, operations will be described.

First described are operations performed by portable terminal management system 20 when it provides SP system 30 with an area access key corresponding to an application. Fig. 6 is a flow chart showing exemplary operations in this scenario.

First, control unit 31 of SP system 30 transmits a service utilization application information to portable terminal management system 20 (step S1). The service utilization application information refers to information for instructing portable terminal management system 20 to reserve a storage area dedicated to an application provided by SP system 30 in SIM card 11 when a request has been made from portable telephone 1. The service utilization application information includes identification information of an application downloaded from SP system 30, a download site of an application when it is downloaded by portable telephone 1, and information indicative of a storage capacity which should be reserved as a storage area dedicated to the application. In addition, the service utilization application information may include, for example, information related to an application, such as which service the application or software is provided for, and information related to a service provider itself. Control unit 31 of SP system 30 transmits the service utilization application information to portable terminal management system 20, for example, in response to manipulations of a manager of SP system 30. In this regard, a download site of an application is SP system 30 for portable telephone 1, and the download site of the application includes, for example, the address of SP system 30.

Upon receipt of the service utilization application information, control unit 21 of portable terminal management system 20 examines the application to determine whether or not it accepts the application from SP system 30 (step S2). A manner of this examination is not particularly limited. Control unit 21 may determine that the application is acceptable, for example, when the service utilization application information satisfies predetermined conditions, and that the application is not acceptable when the service utilization application information does not satisfy the predetermined conditions. In addition, control unit 21 may display the service utilization application information, for example, on a display device (not shown) provided in portable terminal management system 20 to prompt the manager to determine whether or not the application is accepted. In this event, control unit 21 may determine that the application is accepted when the manager of portable terminal management system 20 enters information which indicates that the manager accepts the application, and may determine that the application is not accepted when the manager enters information which indicates that the manager does not accept the application. The manager may view the displayed service utilization application information before he determines whether or not the manager accepts the application.

Control unit 21 of portable terminal management system 20 transmits a service utilization rejection notice to SP system 30 (step S3) when it determines that the application is not accepted (in other words, when it determines that the application from SP system 30 is not permitted). Specifically, control unit 21 transmits to SP system 30 a notification which indicates that control unit 21 does not provide a service provider with a service for "reserving a storage area in SIM card 11 for an application provided by SP system 30."

On the other hand, control unit 21 of portable terminal management system 20 transmits a service utilization permission notice to SP system 30 (step S4) when it determines that the application is accepted (in other words, when it determines that the application from SP system 30 is permitted). Specifically, control unit 21 transmits to SP system 30 a notification which indicates that control unit 21 will provide a service provider with a service for "reserving a storage area in SIM card 11 for an application provided by SP system 30."

Also, at step S4, control unit 21 creates an area access key unique to identification information of an application included in the service utilization application information, and transmits the created area access key to SP system 30 as well.

Control unit 21 may create, for example, a character string which is determined uniquely for the identification information of the application, and employ the character string as the area access key. This character string may be a character string which does not match any of previously created area access keys (character strings) for other applications. Also, this operation for creating the area access key is illustrative, and the creation of the area access key is not limited to the foregoing operation. Further, the area access key may be data other than a character string.

After creating the area access key, control unit 21 registers the identification information of the application, the area access key, the download site of the application, and a storage capacity which should be reserved in the SIM card as a storage area dedicated to the application, in relationship to each other, in the key management database.

On the other hand, upon receipt of the area access key transmitted by portable terminal management system 20, control unit 31 of SP system 30 stores the area access key in storage device 32 (see Fig. 5).

Also, while Fig. 1 shows one SP system 30, a plurality of service providers may possess SP systems, respectively. Fig. 7 is an explanatory diagram showing a situation where an area access key is distributed to a plurality of SP systems.

Fig. 7 illustrates two SP systems 30a, 30b. Each SP system 30a, 30b is similar in configuration to the configuration illustrated in Fig. 5. Portable terminal management system 20 performs processing at step S1 onward when it receives a service utilization application information from SP system 30a which is managed by a certain service provider, to transmit area access key K1 uniquely defined for an application of the service provider. Likewise, portable terminal management system 20 also performs processing at step S1 onward when it receives a service utilization application information from SP system 30b which is managed by another service provider, to transmit area access key K2 uniquely defined for an application of this service provider.

Next, a description will be given of operations when a storage area dedicated to an application is reserved in SIM card 11, and an application is downloaded. Fig. 8 is a flow chart showing exemplary operations in this scenario.

First, control unit 31 of portable telephone 1 transmits a service utilization request information to portable terminal management system 20 for requesting utilization of new application (step S11). The service utilization request information includes a storage capacity of entire SIM card 11 mounted in portable telephone 1, a user ID previously written in this SIM card 11, and identification information of an application which is to be utilized. Control unit 13 transmits the service utilization request information, for example, in response to manipulations of the user of portable telephone 1. A manner of the transmission of the service utilization request information at step S11 is not particularly limited. For example, the service utilization request information may be transmitted through electronic mail or SMS (Short Message Service). Alternatively, control unit 13 may receive from portable terminal management system 20 and display a web page which serves as an information entry screen, and transmit service utilization request information which is entered on the web page.

Upon receipt of the service utilization request information, control unit 21 of portable terminal management system 20 determines whether or not SIM card 11 has enough free capacity to reserve a storage area dedicated to an application which portable telephone 1 attempts to utilize (step S12). Control unit 21 searches for identification information of applications for which storage areas have been previously reserved in SIM card 11 of portable telephone 1 which has transmitted the service utilization request information, for example, with reference to the user management database. Specifically, control unit 21 uses the user ID received at step S11 as a search key, and searches the user management database for identification information of all applications corresponding to the user ID. Then, control unit 21 uses the identification information of the applications as a search key, and searches the key management database for storage capacities to be reserved in the SIM card as storage areas dedicated to the applications. This search is made using the identification information of respective applications retrieved from the user management database, one by one, as a search key.

The total sum of the "storage capacities" retrieved from the key management database is equal to the capacity of storage areas which have been previously reserved in the SIM card as storage areas dedicated to the applications. Control unit 21 subtracts the total sum of the storage capacities retrieved from the key management database and a predetermined storage capacity from the storage capacity of entire SIM card 11, received at step S11, and determines that there is a storage area which can be reserved, when the result of the subtraction indicates a storage capacity equal to or larger than a storage capacity of a storage area for an application which portable telephone 1 attempts to utilize On the other hand, control unit 21 determines that there is not a storage area which can be reserved when the result of the subtraction indicates a storage capacity less than the storage capacity of the storage area for the application which portable telephone 1 attempts to utilize.

In this regard, the storage capacity of the storage area dedicated to the application which portable telephone 1 attempts to utilize may be retrieved from the key management database using a search key which is the identification information of the application received at step S11. Also, the predetermined storage capacity in the foregoing subtraction refers to a storage capacity which has been previously defined as a storage capacity for data other than application data (for example, the user ID and the like). The foregoing operation is illustrative of the operation at step S12, and the determination as to the presence or absence of free capacity is not limited to the foregoing operation.

When control unit 21 of portable terminal management system 20 determines at step S12 that there is no free capacity in SIM card 11, control unit 21 transmits notification which indicates that effect to portable telephone 1 (step S13). A manner of this transmission is not particularly limited, and the notification may be transmitted, for example, by an electronic mail or SMS. Alternatively, control unit 21 may transmit a web page for displaying a message which provides notification that there is no free capacity.

Control unit 21 reserves a storage area dedicated to the application in SIM card 11 when it determines at step S12 that there is free capacity in SIM card 11 (step S14). Specifically, control unit 21 of portable terminal management system 20 searches the key management database for an area access key, the download site of the application, and a storage capacity to be reserved, using a search key which is the identification information of the application received at step S11. Then, control unit 21 transmits the area access key retrieved from the key management database to portable telephone 1 together with an instruction to reserve a storage area having the retrieved storage capacity in SIM card 11 and stores the area access key in the storage area.

Control unit 13 of portable telephone 1 reserves a storage area having an instructed storage capacity in SIM card 11 in accordance with the instruction from portable terminal management system 20, and stores the area access key received from portable terminal management system 20 in this storage area. After reserving the storage area, control unit 13 notifies portable terminal management system 20 to that effect.

Upon receipt of the notice which indicates that the storage area has been reserved, control unit 21 of portable terminal management system 20 transmits a notice of the completed creation of the storage area dedicated to the application to portable telephone 1 together with the identification information of the application (step S15). Also, at step S15, control unit 21 transmits the download site of the application, retrieved from key management database, to portable telephone 1 as well (step S15). Control unit 13 of portable telephone 1 stores the received identification information and download site of the application in the storage area which has been preserved as a storage area for the application.

Subsequently, control unit 13 of portable telephone 1 transmits an application download request using the received information on the download site (step S16). Since the download site of the application includes the address of SP system 30, control unit 13 transmits the application download request to SP system 30. Upon receipt of the download request, control unit 31 of SP system 30 transmits the requested application to portable telephone 1 (step S17). Upon receipt of the application from SP system 30, control unit 13 of portable telephone 1 stores the application in storage device 14 provided in portable telephone 1.

Subsequently, control unit 13 of portable telephone 1 transmits a user registration request for the received application to SP system 30 (step S18), and control unit 31 of SP system 30 performs a user registration in response to the user registration request (step S19). Upon completion of the user registration, control unit 31 of SP system 30 transmits a user registration completion notice to portable telephone 1 (step S20).

In the foregoing communication at steps S11 - S20, portable telephone 1 makes the communication through network interface unit 15 and a radio base station (not shown) included in communication network 40.

With the foregoing operations, a storage area dedicated to the application is reserved in SIM card 11, and portable telephone 1 downloads the application. One portable telephone does not always download one type of application, so that a storage area dedicated to each application is reserved in SIM card 11 for each of downloaded applications. Also, while Fig. 1 illustrates a single portable telephone, the number of portable telephones is not limited to one. Each portable telephone individually communicates with portable terminal management system 20 to proceed with processing at step S11 onward, thereby reserving a storage area for an application in a SIM card of each portable telephone, and downloading an application to each portable telephone.

Fig. 9 is an explanatory diagram showing a situation where storage areas dedicated to applications have been reserved in SIM cards of a plurality of portable telephones.

Fig. 9 illustrates two portable telephones 1a, 1b. When portable telephone 1a transmits service utilization request information to portable terminal management system 20 for requesting utilization of an application called "Service A," a storage area dedicated to "Service A" is reserved in SIM card 11 of portable telephone 1a, and portable telephone 1a downloads the application "Service A" through processing at step S11 onward. The same is applied when portable telephone 1a transmits service utilization request information to portable terminal management system 20 for requesting utilization of an application called "Service B." The same is also applied when another portable telephone 1b transmits service utilization request information to portable terminal management system 20 for requesting utilization of "Service A" or "Service B."

In this regard, while Fig. 9 shows a scenario where each portable telephone 1a, 1b utilizes "Service A" and "Service B," respectively, each portable telephone may utilize different applications.

Next, a description will be given of operations which are performed for releasing a storage area dedicated to an application, reserved in SIM 11, and for deleting information related to the storage area.

For releasing a storage area dedicated to an application, reserved in SIM card 11, control unit 13 of portable telephone 1 transmits a release permission request for releasing the storage area dedicated to the application, identification information of the application, and a user ID previously written in the SIM card to portable terminal management system 20. Control unit 13 performs this transmission operation, for example, in response to manipulations of the user of the portable telephone 1.

Upon receipt of these pieces of information, control unit 21 of portable terminal management system 20 deletes identification information which matches the received identification information of the application from among identification information of applications corresponding to the received user ID, from user management database. Then, control unit 21 transmits a release permission notice, in which the identification information of the application is specified, for releasing the storage area of the application to portable telephone 1.

Control unit 13 of portable telephone 1 releases the storage area dedicated to the application corresponding to the identification information of the specified application after receiving the release permission notice from portable terminal management system 20.

In the communication for releasing a storage area, portable telephone 1 makes the communication through network interface unit 15 and a radio base station (not shown).

Next, a description will be given of an application data update operation. Fig. 10 is a flow chart showing exemplary operations for updating application data stored in SIM card 11.

The user of portable telephone 1 enjoys a service associated with an application by portable telephone 1 executing processing in accordance with the application. In this event, portable telephone 1 communicates with SP system 30 to update application data within SIM 11. Also, in this event, portable terminal management system 20 functions as a gate way between portable telephone 1 and SP system 30 to relay data between portable telephone 1 and SP system 30.

Here, a description is given in connection with a scenario, taken as an example, where portable telephone 1 transmits/receives data through NFC chip 12 to update data for non-contact IC chip (data which is updated with data received/transmitted through the non-contact IC chip) among application data. Also, the description will be given in connection with a scenario, taken as an example, where reader/writer (not shown in Fig. 1) is also connected to portable terminal management system 20 through a communication channel, and portable telephone 1 is used near the reader/writer.

Control unit 13 of portable telephone 1 transmits a rewrite request to the reader/writer (not shown in Fig. 1) through NFC chip 12 for rewriting non-contact IC chip data in accordance with a downloaded application (step S31). An example of the rewrite request for non-contact IC chip data may be, for example, an electronic money charge request or the like. The reader/writer transmits the non-contact IC chip data rewrite request from portable telephone 1 to SP system 30. In this event, portable terminal management system 20 functions as a gate way between portable telephone 1 and SP system 30.

Control unit 31 of SP system 30 transmits a non-contact IC chip data rewrite instruction to portable telephone 1 in response to the non-contact IC chip data rewrite request from portable telephone 1 (step S32). In this event, control unit 31 reads an area access key of an application which uses data to be rewritten from storage device 32, and transmits the area access key to portable telephone 1 together with the non-contact IC chip data rewrite instruction. Control unit 13 of portable telephone 1 receives the non-contact IC chip data rewrite instruction and area access key through the reader/writer (not shown) and NFC chip 12. In this event, portable terminal management system 20 functions as a gate way between portable telephone 1 and SP system 30.

Upon receipt of the non-contact IC chip data rewrite instruction and area access key, control unit 13 of portable telephone 1 determines whether the area access key stored in a storage area dedicated to the application under execution matches the received area access key. When they match, control unit 13 rewrites application data stored in the storage area dedicated to the application reserved in SIM card 11 in accordance with the non-contact IC chip data rewrite instruction. On the other hand, when the area access key stored in the storage area dedicated to the application does not match the received area access key, control unit 13 refrains from rewriting the application data.

With the foregoing operations, a variety of application data can be updated, for example, for electronic money data and the like.

Also, while the foregoing example illustrates a scenario where portable telephone 1 transmits/receives data through the NFC chip when application data is to be updated, application data may be updated in SIM card 11 through communication which is made with an air network function. Specifically, control unit 13 of portable telephone 1 may transmit an application data rewrite request to SP server 30 through network interface unit 15, radio base station (not shown), and communication network 40 in accordance with a downloaded application. Then, control unit 31 of SP system 30 transmits an application data rewrite instruction and an area access key to portable telephone 1 in response to the application data rewrite request from portable telephone 1. Control unit 13 of portable telephone 1 receives the application data rewrite instruction and area access key through communication network 40, radio base station (not shown), and network interface unit 15. After receiving the application data rewrite instruction and area access key, control unit 13 determines whether or not the stored area access key matches the receive area access key, and rewrites application data when they match, in a manner similar to the aforementioned scenario. Likewise, in the foregoing operations, portable terminal management system 20 functions as a gate way between portable telephone 1 and SP system 30.

While the foregoing description has shown a case where portable terminal management system 20 serves as a gate way at steps S31, S32, portable telephone 1 and SP system 30 may communicate with each other without intervention of portable terminal management system 20 at steps S31, S32.

In another alternative, SP system 30 may transmit an encrypted area access key, while portable telephone 1 may decrypt the received area access key.

Next, a description will be given of operations in a scenario where the user of the portable telephone replaces a portable telephone with one that is to be newly used, and transports SIM card 11 into the new portable telephone.

Fig. 11 is an explanatory diagram showing a situation where SIM card 11 is transported into a portable telephone which is newly used. Portable telephone 1c shown in Fig. 11 is a potable telephone which is newly used. SIM card 11 mounted in portable telephone 1 is removed from portable telephone 1, and mounted in new portable telephone 1c. Also, the configuration of new portable telephone 1 c is similar to the configuration shown in Fig. 3.

SIM card 11 has storage areas 51, 52 dedicated to applications, previously reserved therein. However, portable telephone 1c, which has been mounted with this SIM card 11, has no application downloaded therein. Control unit 13 of new portable telephone 1c downloads applications represented by application identification information stored in the storage areas reserved in the SIM card. For example, control unit 13 reads the download site of an application stored in a storage area (for example, storage area 51 shown in Fig. 11) reserved in mounted SIM card 11, and transmits an application download request to the download site through network interface unit 15. Here, an example is given where SP system 30 shown in Fig. 1 is the download site. Upon receipt of the application download request from new portable telephone 1c, control unit 31 of SP system 30 transmits the requested application to portable telephone 1c. Control unit 13 of portable telephone 1c receives the application through network interface unit 15, and stores the application in storage device 14.

The foregoing communication between portable telephone 1c and SP system 30 is made in accordance with a DM (Device Management) protocol. Specifically, control unit 13 of portable telephone 1c transmits an application download request in accordance with the DM protocol. SP system 30 in turn transmits the requested application to portable telephone 1 in accordance with the DM protocol.

The DM protocol is an html-based protocol which is defined by a standardization organization called OMA (Open Mobile Alliance).

The amount of communicated data can be kept smaller when portable telephone 1 c transmits a download request, and SP system 30 transmits an application in accordance with the DM protocol. In addition, the DM protocol has the advantage of high function expendability.

The foregoing description has been given in connection with a scenario, taken as an example, where portable terminal management system 20 transmits information on a download site of an application to portable telephone 1, portable telephone 1 stores the download site in SIM card 11, and new portable telephone 1c, when SIM card 11 is transported therein, reads the download site to download an application. In an embodiment where new portable telephone 1c can determine download sites even if SIM card 11 does not store the download sites, information on the application download sites need not be stored in SIM card 11.

As shown in Fig. 11, the user can keep utilizing, even with new portable telephone 1c, the non-contact IC chip data for an application so far executed by portable telephone 1 in communications with reader/writer (R/W) 61.

According to the present invention, when the portable terminal operates in accordance with a downloaded application, the portable terminal stores data used by the application in SIM card 11. Then, during the operation in accordance with the application, when the portable telephone stores data received through non-contact IC chip 12 (NFC chip 12 in the foregoing embodiment), the data is stored in SIM card 11. Accordingly, the portable terminal can save data in SIM card 11 for use by the user of the portable terminal in receiving a service using the application and non-contact IC chip. Then, such data is often significantly important data which represents the user's property such as electronic money.

In the present invention, the portable terminal stores data in SIM card 11 for use in receiving a service using a downloaded application and a non-contact IC chip, and then the user can certainly use important data for use in receiving a service using the application and non-contact IC chip with a new portable terminal, even when the portable terminal is replaced with the new portable terminal, by transporting SIM card 11 into the new portable terminal. In this way, the present invention can appropriately save data for use in receiving a service using the non-contact IC chip.

Also, in the present invention, the portable terminal stores an area access key in a storage area dedicated to an application, and updates data in this storage area when SP system 30 transmits data to the portable terminal together with an area access key which matches the stored area access key. Each service provider can prevent data to be used by applications provided thereby from being accessed by an SP system of another service provider, thus increasing the security for application data stored in SIM card 11.

Also, portable telephone 1 transmits service utilization request information to portable terminal management system 20 through communication network 40 which includes network interface unit 11 and a radio base station (not shown), while portable terminal management system 20 registers the user management database with identification information of newly utilized applications on a per-SIM card basis. Then, portable terminal management system 20 transmits to portable terminal 1 an instruction to reserve a storage area in SIM card 11 through communication network 40 including a radio base station (not shown).

Also, when portable terminal management system 20 receives a release permission request for releasing a storage area dedicated to an application in SIM card 11 from portable telephone 1 through communication network 40 which includes a radio base station (not shown), portable terminal management system 20 deletes identification information associated with the release permission request, among identification information of applications corresponding to that SIM card 11, from the user management database. Then, portable terminal management system 20 transmits a release permission notice for releasing the storage area dedicated to the application to portable telephone 1 through communication network 40 which includes the radio base station (not shown). In this way, a storage area dedicated to an application can be freely added or deleted through a communication which includes a radio communication path in a communication path. Stated another way, a storage area dedicated to an application can be freely added or deleted by an air network function of the portable telephone.

Also, portable telephone 1 and SP system 30 can communicate with each other through communication network 40 which includes a radio base station (not shown). Accordingly, even without using a non-contact IC chip, portable telephone 1 can communicate with SP system 30 to update application data. In other words, the user of portable telephone 1 can enjoy services with an air network function of portable telephone 1, even without using a non-contact IC chip.

Notably, while the foregoing embodiment has been described in a scenario where a SIM card is used as a memory card for storing data, the present invention is not limited to the SIM card.

In the foregoing embodiment, application storing means is implemented by storage device 14 of portable terminal 1. Data writing means is implemented by control unit 13 of portable terminal 1.

Also, in the configuration shown in the foregoing embodiment, portable terminal 1 comprises downloading means, responsive to mounting of a memory card which stores identification information of application software, for requesting a device which provides application software represented by the identification information for the application software, and for receiving the application software from that device, thereby downloading the application, where the downloading means requests the device for the application software and receives the application software from the device in accordance with the DM protocol. In the foregoing embodiment, the downloading means is implemented by control unit 13 of portable terminal 1.

Also, in the configuration shown in the foregoing embodiment, portable terminal 1 comprises service utilization requesting means for transmitting service utilization request information which is information for requesting the portable terminal management system connected to a communication network including a radio base station for utilization of new application software; and storage area reserving means, responsive to an instruction received from the portable terminal management system to reserve a storage area dedicated to the application software in a memory card, for reserving a storage area dedicated to the application software in the memory card in accordance with the instruction, where the service utilization requesting means transmits the service utilization request information to the portable terminal management system through the radio base station, and the storage area reserving means receives the instruction from the portable terminal management system through the radio base station. In the foregoing embodiment, the service utilization requesting means and storage area reserving means are implemented by control unit 13 of portable terminal 1.

Also, in the configuration shown in the foregoing embodiment, portable terminal 1 comprises storage area release requesting means for transmitting a release request to the portable terminal management system for releasing a storage area dedicated to application software; and storage area releasing means for releasing the storage area when storage area release permission is received from the portable terminal management system, where the storage area release requesting means transmits the storage area release request to the portable terminal management system through a radio base station, and where the storage area releasing means receives the release permission from the portable terminal management system through the radio base station. In the foregoing embodiment, the storage area release requesting means and storage area releasing means are implemented by control unit 13 of portable terminal 1.

Also, in the configuration shown in the foregoing embodiment, the storage area reserving means receives authentication data uniquely defined on a per-application software basis from the portable terminal management system, and stores the authentication data defined for the application software in a storage area dedicated to the application software, and when the data writing means receives a data rewrite instruction for rewriting data in a storage area corresponding to one piece of application software through a non-contact IC chip, the data writing means rewrites data in accordance with the data rewrite instruction if it receives authentication data which matches authentication data stored in the storage area together with the data rewrite instruction, and does not rewrite data if it does not receive authentication data which matches the authentication data stored in the storage area together with the data rewrite instruction.

Also, in the configuration shown in the foregoing embodiment, portable terminal 1 comprises radio communication means for receiving data rewrite instruction for rewriting data in a storage area corresponding to one piece of application software through the radio base station, and when the data writing means receives a data rewrite instruction for rewriting data in a storage area corresponding to one piece of application software through the radio communication means, the data writing means rewrites data in accordance with the data rewrite instruction if it receives authentication data which matches authentication data stored in the storage area together with the data rewrite instruction, and does not rewrite data if it does not receive authentication data which matches the authentication data stored in the storage area together with the data rewrite instruction. In the foregoing embodiment, the radio communication means is implemented by network interface unit 15 of portable terminal 1.

Also, in the foregoing embodiment, user management database storing means is implemented by user management database storage unit 23 of portable terminal management system 20. User management database managing means and reserve instruction transmitting means are implemented by control unit 21 of portable terminal management system 20.

Also, in the configuration shown in the foregoing embodiment, portable terminal management system 20 comprises release permission transmitting means, responsive to a release request received from the portable terminal for releasing a storage area dedicated to application software reserved in a memory card, for transmitting a storage area release permission to the portable terminal, where the user management database managing means deletes identification information of application software mapped to an ID defined for the memory card from the user management database, upon receipt of the release request from the portable terminal for releasing the storage area dedicated to the application software reserved in the memory card.
In the foregoing embodiment, the release permission transmitting means is implemented by control unit 21 of portable terminal management system 20.

Also, in the configuration shown in the foregoing embodiment, portable terminal management system 20 comprises authentication data creating means for creating authentication data unique to an application provided by an application provider device and for transmitting the authentication data to the application provider device for providing the portable terminal with application software, where the reserve instruction transmitting means transmits the authentication data unique to application software together with an instruction to reserve a storage area dedicated to the application software in the memory card. In the foregoing embodiment, the authentication data creating means is implemented by control unit 21 of portable terminal management system 20.

Also, in the configuration shown in the foregoing embodiment, portable terminal management system 20 comprises area management database storing means for storing an area management database which is a database that maps identification information of application software to a storage capacity to be reserved as a storage area dedicated to the application software; and free capacity determining means, responsive to the ID defined for the memory card and service utilization request information which is information indicative of a request for utilization of new application software from the portable terminal, for determining whether or not there is free capacity in the memory card with reference to the user management database and area management database, where the user management database managing means registers the ID defined for the memory card and the identification information of the new application software in the user management database in relationship to each other when it is determined that there is free capacity, and where the reserve instruction transmitting means transmits an instruction to the portable terminal to reserve a storage area dedicated to the new application software in the memory card when it is determined that there is free capacity. In the foregoing embodiment, the area management database storing means is implemented by key management database storage unit 24. The free capacity determining means is implemented by control unit 21 of portable terminal management system 20.

Also, the foregoing embodiment shows a scenario where the portable terminal management system is used as a gateway between a device for transmitting a data rewrite instruction to the portable terminal to rewrite data used by application software, and the portable terminal.

### INDUSTRIAL AVAILABILITY

The present invention is suitably applied to management of memory cards such as a SIM card mounted in a portable terminal.

While the present invention has been described with reference to some embodiments, the present invention is not limited to the embodiments described above. The present invention can be modified in configuration and details in various manners which can be understood by those skilled in the art without departing from the scope of the present invention.

This application is based upon and claims the benefit of priority from Japanese Patent Application No. 2007-140883 filed on May 28, 2007, the content of which is incorporated by reference.

## Claims

1. A portable terminal comprising:
a non-contact IC chip;
a removable memory card;
application storing means for storing application software downloaded; and
data writing means for storing data for use by application software which utilizes said non-contact IC chip into said memory card,
wherein said data writing means stores identification information of new application software in said memory card when the application software is downloaded.

2. The portable terminal according to claim 1, further comprising downloading means, responsive to mounting of a memory card which has stored therein identification information of application software, for requesting application software represented by the identification information from a device which provides the application software, and for receiving the application software from said device, thereby downloading the application,
wherein said downloading means requests said device for application software and receives the application software from said device, in accordance with a DM protocol.

3. The portable terminal according to claim 1 or 2, further comprising:
service utilization requesting means for transmitting service utilization request information which is information indicative of a request for utilization of new application software, to a portable terminal management system connected to a communication network which includes a radio base station; and
storage area reserving means, responsive to an instruction from said portable terminal management system to reserve a storage area dedicated to the application software in said memory card, for reserving a storage area dedicated to the application software in the memory card in accordance with said instruction,
wherein said service utilization requesting means transmits said service utilization request information to said portable terminal management system through said radio base station, and
said storage area reserving means receives said instruction from said portable terminal management system through said radio base station.

4. The portable terminal according to claim 3, further comprising:
storage area release requesting means for transmitting a release request to said portable terminal management system for releasing a storage area dedicated to application software; and
storage area releasing means for releasing said storage area upon receipt of a release permission for the storage area from said portable terminal management system,
wherein said storage area release requesting means transmits a release request of said storage area to said portable terminal management system through said radio base station, and
said storage area releasing means receives said release permission from said portable terminal management system through said radio base station.

5. The portable terminal according to claim 3 or 4, wherein:
said storage area reserving means receives authentication data uniquely defined for each application software from said portable terminal management system, and stores the authentication data defined for application software in a storage area dedicated to the application software, and
when said data writing means receives a data rewrite instruction for rewriting data in a storage area corresponding to an application software through said non-contact IC chip, said data writing means rewrites data in accordance with the data rewrite instruction if said data writing means receives authentication data which matches authentication data stored in said storage area together with said data rewrite instruction, and does not rewrite data if said data writing means does not receive authentication data which matches the authentication data stored in said storage area together with said data rewrite instruction.

6. The portable terminal according to claim 5, further comprising radio communication means for receiving a data rewrite instruction for rewriting data in a storage area corresponding to an application software through said radio base station,
wherein when said data writing means receives a data rewrite instruction for rewriting data in a storage area corresponding to an application software through said radio communication means, said data writing means rewrites data in accordance with the data rewrite instruction if said data writing means receives authentication data which matches authentication data stored in said storage area together with said data rewrite instruction, and does not rewrite data if said data writing means does not receive authentication data which matches the authentication data stored in said storage area together with said data rewrite instruction.

7. A portable terminal management system for managing a memory card mounted in a portable terminal which comprises a non-contact IC chip, said memory card including a storage area reserved for storing data for use by application software which utilizes the non-contact IC chip, said portable terminal management system comprising:
user management database storing means for storing a user management database which is a database that relates an ID defined for said memory card to identification information of application software for which a storage area has been reserved in said memory card;
user management database managing means, responsive to reception of said ID defined for said memory card and service utilization request information which is information indicative of a request for utilization of new application software from said portable terminal, for registering the ID defined for said memory card and the identification information of the application software in the user management database in relationship to each other; and
reserve instruction transmitting means for transmitting an instruction to said portable terminal to reserve a storage area dedicated to the application software in said memory card.

8. The portable terminal management system according to claim 7, further comprising release permission transmitting means, responsive to a release request received from said portable terminal, said release request being for releasing a storage area dedicated to application software reserved in said memory card, for transmitting release permission for the storage area to said portable terminal,
wherein upon receipt of a release request from said portable terminal for releasing a storage area dedicated to application software reserved in said memory card, said user management database managing means deletes identification information of the application software related to the ID defined for said memory card from said user management database.

9. The portable terminal management system according to claim 7 or 8, further comprising authentication data creating means for creating authentication data unique to an application provided by an application provider device, and for transmitting the authentication data to the application provider device for supplying application software to said portable terminal,
wherein said reserve instruction transmitting means transmits authentication data unique to application software together with an instruction to reserve a storage area dedicated to the application software in said memory card.

10. The portable terminal management system according to any one of claims 7 to 9, further comprising:
area management database storing mean for storing an area management database which is a database that relates identification information of application software to a storage capacity to be reserved as a storage area dedicated to the application software; and
free capacity determining means, responsive to receipt of the ID defined for said memory card and service utilization request information which is information indicative of a request for utilization of new application software from said portable terminal, for determining whether or not there is free capacity in said memory card by referring to said user management database and said area management database,
wherein said user management database managing means registers the ID defined for said memory card and the identification information of said new application software in said user management database in relationship to each other when it is determined that there is free capacity, and
said reserve instruction transmitting means transmits an instruction to said portable terminal to reserve a storage area dedicated to said new application software in said memory card when it is determined that there is free capacity.

11. The portable terminal management system according to any one of claims 7 to 10, wherein said portable terminal management system is used as a gateway between a device for transmitting a data rewrite instruction to said portable terminal to write data for use by application software and said portable terminal.

12. A data saving method applied to a portable terminal which comprises a non-contact IC chip, a removable memory card, and application storing means for storing application software downloaded, said data saving method comprising:
storing data for use by application software which utilizes said non-contact IC chip in said memory card; and
storing identification information of new application software in said memory card when the application software is downloaded.

13. The data saving method according to claim 12, further comprising:
transmitting service utilization request information which is information indicative of a request for utilization of new application software to a portable terminal management system connected to a communication network which includes a radio base station, through the radio base station; and
upon receipt of an instruction to reserve a storage area dedicated to said application software in said memory card from said portable terminal management system through said radio base station, reserving a storage area dedicated to the application software in said memory card in accordance with said instruction.

14. A portable terminal management method applied to a portable terminal management system for managing a memory card mounted in a portable terminal which comprises a non-contact IC chip, said memory card including a storage area reserved for storing data for use by application software which utilizes the non-contact IC chip, said portable terminal management system comprising user management database storing means for storing a user management database which is a database that relates an ID defined for said memory card to identification information of application software for which a storage area has been reserved in said memory card, said portal terminal management method comprising:
upon receipt of said ID defined for said memory card and service utilization request information which is information indicative of a request for utilization of new application software from said portable terminal, registering the ID defined for said memory card and the identification information of the application software in said user management database in relationship to each other; and
transmitting an instruction to said portable terminal to reserve a storage area dedicated to said application software in said memory card.

15. The portable terminal management method according to claim 14, further comprising:
upon receipt of a release request from said portable terminal, releasing a storage area dedicated to application software reserved in said memory card, transmitting a release permission for the storage area to said portable terminal,
upon receipt of said release request from said portable terminal for releasing said storage area dedicated to said application software reserved in said memory card, deleting identification information of the application software related to said ID defined for said memory card from said user management database.

16. A portable terminal management program installed in a computer for managing a memory card mounted in a portable terminal comprising a non-contact IC chip, said memory card including a storage area reserved for storing data for use by application software which utilizes the non-contact IC chip, said computer comprising user management database storing means for storing a user management database which is a database that relates an ID defined for said memory card to identification information of application software for which a storage area has been reserved in said memory card, said program for causing said computer to execute:
user management database management processing, responsive to reception of said ID defined for said memory card and service utilization request information which is information indicative of a request for utilization of new application software from said portable terminal, for registering the ID defined for said memory card and said identification information of the application software in said user management database in relationship to each other; and
reserve instruction transmission processing for transmitting an instruction to said portable terminal to reserve a storage area dedicated to said application software in said memory card.

17. The portable terminal management program according to claim 16, causing said computer to execute:
release permission transmission processing, responsive to a release request received from said portable terminal, said release request being for releasing a storage area dedicated to application software reserved in said memory card, for transmitting release permission for the storage area to said portable terminal; and
data deletion processing, responsive to said release request received from said portable terminal for releasing said storage area dedicated to said application software reserved in said memory card, for deleting identification information of the application software related to said ID defined for said memory card from said user management database.
